# EUROPEAN PATENT SPECIFICATION

(11) **EP 3 833 109 B1**
(45) Date of publication and mention of the grant of the patent: **08.11.2023**
(21) Application number: 20199984.4
(22) Date of filing: 27.02.2015
(51) Int. Cl.: H04W 48/16, H04W 74/00, H04W 74/08

(54) **RANDOM ACCESS METHOD, USER EQUIPMENT, AND BASE STATION**
DIREKTZUGRIFFSVERFAHREN, BENUTZERGERÄT UND BASISSTATION
PROCÉDÉ D'ACCÈS ALÉATOIRE, ÉQUIPEMENT UTILISATEUR ET STATION DE BASE

(43) Date of publication of application: 09.06.2021
(62) Divisional of application: 15882964.8
(73) Proprietor: HUAWEI TECHNOLOGIES CO., LTD., Shenzhen, Guangdong 518129 (CN)
(72) Inventor: DENG, Tianle, Shenzhen, Guangdong 518129 (CN); WANG, Man, Shenzhen, Guangdong 518129 (CN); ZHOU, Kaijie, Shenzhen, Guangdong 518129 (CN)
(74) Representative: Isarpatent

(56) References cited:
- EP-A1- 2 744 285
- US-A1- 2013 083 753
- US-A1- 2014 314 048

## Description

### TECHNICAL FIELD

The present invention relates to the field of wireless communications, and in particular, to a random access method performed by a user equipment, a random access method performed by a base station, a user equipment, and a base station.

### BACKGROUND

To meet growing communication requirements of users, research and development of the fifth generation (Fifth Generation, 5G) communications system have been launched. Key performance indicators of the 5G communications system mainly include a user-experienced rate, connection density, an end-to-end delay, traffic density, mobility, and a user peak rate. A 5G service has a high requirement on an end-to-end delay. A delay required by a normal service is 10 milliseconds, and a delay required by the Internet of Vehicles and a smart grid is as short as 1 millisecond.

In an architecture of a current Long Term Evolution (Long-Term Evolution, LTE) system, duration of a subframe is 1 millisecond. In a random access procedure of user equipment (user equipment, UE), a process for the UE to enter an active state (active) from an idle state (idle) takes approximately 50 milliseconds. Such an excessively long transmission delay of the LTE system cannot meet a delay requirement of a short-delay service. EP 2 744 285 Al relates to a short-latency resource management method and device, and a radio access network device. US 2014/314048 A1 relates to a connection establishment method for a Machine Type Communication (MTC) User Equipment (UE) in a wireless communication system.

### SUMMARY

The object of the present invention is to provide a random access method, user equipment and base station to meet a delay requirement of a short-delay service.This object is solved by methods, a user equipment and a base station as defined in the attached independent claims and further advantageous embodiments and improvements of the invention are listed in the dependent claims.

The present invention provides a random access method performed by a user equipment, UE, according to claim 1.

The present invention also provides a method performed by a base station according to claim 8.

The present invention also provides a user equipment apparatus according to claim 12.

The present invention also provides a base station apparatus according to claim 13.

In the technical solutions provided by the present invention, user equipment sends, to a base station, a random access request message carrying short subframe service information, the short subframe service information indicates that the UE is to perform a short subframe service after a random access procedure is triggered, and duration of a short subframe is less than 1 millisecond. After transmission of the random access request message is complete, the user equipment and the base station exchange rest messages of the random access procedure over a resource corresponding to the short subframe service. Design of a shorter random access procedure reduces a delay for UE to enter an active state from an idle state, so as to reduce a time required for an entire random access procedure. A delay requirement of a short-delay service is met.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic diagram of an application scenario of an embodiment of the present invention;
FIG. 2 is a schematic flowchart of a random access method according to an embodiment of the present invention;
FIG. 3 is a schematic flowchart of a random access method according to an embodiment of the present invention;
FIG. 4 is a schematic flowchart of a random access method according to an embodiment of the present invention;
FIG. 5 is a schematic flowchart of a random access method according to an embodiment of the present invention;
FIG. 6 is a schematic structural diagram of UE according to an embodiment of the present invention;
FIG. 7 is a schematic flowchart of another random access method according to an embodiment of the present invention;
FIG. 8 is a schematic structural diagram of a base station according to an embodiment of the present invention; and
FIG. 9 is diagram of resource configuration of a second random access channel.

### DESCRIPTION OF EMBODIMENTS

To make the objectives, technical solutions, and advantages of the present invention clearer, the following further describes implementations of the present invention in detail with reference to the accompanying drawings.

The technical solutions provided in the embodiments of the present invention are applicable to an LTE system and an evolved LTE communications system.

A base station in the embodiments of the present invention may be an evolved NodeB (e-NodeB, evolved NodeB) in an LTE system or a similar base station in an evolved LTE communications system.

UE in the embodiments of the present invention may communicate with one or more core networks by using a radio access network (Radio Access Network, RAN). For example, the UE may be a mobile phone or a computer provided with a mobile terminal. For example, the user equipment may alternatively be a portable, pocket, handheld, computer built-in mobile apparatus or an in-vehicle mobile apparatus that exchanges voice and/or data with the radio access network.

It is defined in the embodiments of the present invention that a unidirectional communication link from a base station to UE is a downlink and a unidirectional communication link from UE to a base station is an uplink.

Virtual multicarrier aggregation is a key technology in evolution from the LTE system to the 5G communications system. Virtual multicarrier aggregation means that multiple carriers have a same central frequency and same bandwidth, and different virtual carriers are used to carry different service types and have different subframe structures, including a normal subframe and a short subframe. A normal subframe is a subframe that is commonly used in LTE systems and whose duration is 1 millisecond (ms). A short subframe is a subframe that is designed to satisfy a short delay requirement of a 5G service and whose duration is less than 1 ms. Accordingly, a service whose service data is sent by using short subframes is referred to as a short subframe service, and a service whose service data is sent by using normal subframes is referred to as a normal subframe service. Duration of a subframe may also be referred to as a time domain length of the subframe, or a time domain resource size of the subframe.

The multiple virtual carriers include a virtual primary component carrier and a virtual secondary component carrier. The virtual primary component carrier configures, in a physical downlink control channel (physical downlink control channel, PDCCH) or a broadcast message, resources schedulable by the virtual secondary component carrier, and the virtual secondary component carrier dynamically allocates a resource from the schedulable resources to a corresponding service or user. By applying the virtual multicarrier aggregation technology, data of a short-delay service may be carried by the virtual secondary component carrier, and data of a normal-delay service may be carried in the virtual primary component carrier. That is, this technology enables normal-delay and short-delay services to share bandwidth or a carrier, without much modification to an architecture of the existing LTE system. Good compatibility is achieved.

The virtual multicarrier aggregation technology is applicable to multiple networking scenarios, including a macro cell (macro cell) networking scenario, a macro cell and small cell (small cell) joint networking scenario, virtual multicarrier aggregation between small cells, and the like. The small cell may be any small cell product, such as a micro cell (micro), or a pico cell (pico). Specifically, in the macro cell networking scenario, virtual multicarrier aggregation is implemented in a macro cell. In the macro cell and small cell joint networking scenario, virtual multicarrier aggregation may be implemented in a small cell, and to avoid interference of a macro cell to short subframe resources of a small cell, the small cell negotiates with the macro cell to have the macro cell give away spectrum resources in which subframes of the small cell are located. Optionally, in the macro cell and small cell joint networking scenario, virtual multicarrier aggregation may be separately implemented in a small cell and a macro cell, and to avoid interference of the macro cell to short subframe resources of the small cell, in allocation, the macro cell makes the macro cell or another secondary component carrier of the small cell give away spectrum resources in which short subframes of the small cell are located. In addition, in a macro cell and small cell joint networking scenario with a remote radio unit, if cell identifiers of a macro cell and a micro cell are different, virtual multicarrier aggregation may be implemented in the macro cell. If cell identifiers of a macro cell and a micro cell are identical, a virtual primary component carrier of a remote radio unit (remote radio unit, RRU) is equivalent to an antenna port of the macro cell, bandwidth of the virtual primary component carrier or a virtual secondary component carrier of the RRU is the same as bandwidth of the macro cell, and the small cell may bear different virtual carriers or bear only the virtual secondary component carrier.

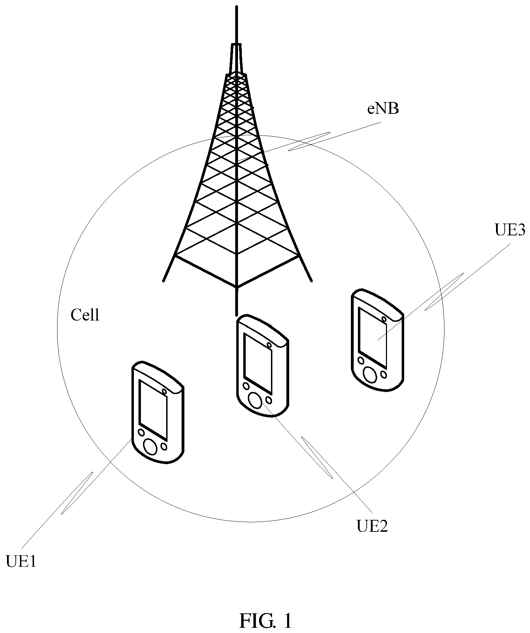

FIG. 1 is a schematic diagram of an application scenario according to an embodiment of the present invention.

As shown in FIG. 1, an eNB manages one cell (cell), and there are three user equipments, that is, UE1, UE2, and UE3, in a coverage area of the cell. When one UE is to enter a connected state from an idle state, or send uplink information when being in different states such as a cell forward access state, a cell paging state, or a registration area paging state, the UE may establish a connection to the eNB by using a random access procedure, to obtain a corresponding communication service. A random access procedure between each UE and a base station 1 is independent. The base station may simultaneously process random access requests sent by multiple UEs. It can be understood that a base station device such as an eNB may manage one or more cells, and this is not limited in this embodiment of the present invention.

Generally, steps in a random access procedure include S100 to S105.

S 100: After discovering a cell, UE periodically receives a broadcast message broadcast by a base station.

The broadcast message includes a random access resource available to the UE, including a time domain resource and a frequency domain resource ("time-frequency resource" for short) of a physical random access channel (physical random access channel, PRACH), and parameters such as an initial power constant value (ConstantValue) of a random access preamble, a power ramp step (PowerRampStep) of the random access preamble, a maximum quantity of ramps (PreambleRetransMax) of the random access preamble.

S101: The UE sends a random access request message to the base station.

The random access request message may be sent in a form of a preamble (preamble). A sequence of the preamble, a time-frequency resource of a PRACH bearing a random access channel (random access channel, RACH) of the preamble, and the like may be determined according to related information carried by the broadcast message.

S 102: The base station sends control information to the UE by using a PDCCH.

S103: The base station sends a random access response (random access response) message to the UE.

S104: The UE sends a radio resource control connection request (radio resource command connection request, RRC connection request) message.

S105: The base station confirms that an RRC connection is established and sends an acknowledgement message (acknowledgement, ACK) to the UE.

In an LTE system, duration of each frame (frame) is 10 ms, and each frame may be divided into 10 subframes, duration of each subframe being 1 ms. Signaling or data is transmitted in units of frames or subframes. It takes about 50 ms for UE to complete an entire random access procedure to enter an active state from an idle state, which is an excessively long transmission delay. If the foregoing 1 ms frame is used to bear a short-delay service, a requirement of the short-delay service cannot be met. Therefore, when the virtual multicarrier aggregation technology is used to perform a short-delay service, a corresponding random access procedure needs to be designed.

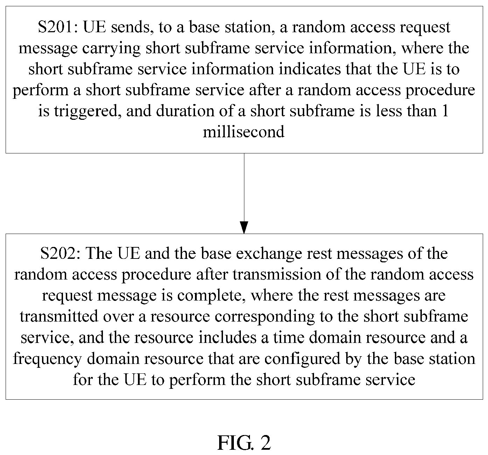

FIG. 2 is a flowchart of a random access method according to an embodiment of the present invention. The method is used to access a short subframe service.

The method may be executed by UE or a similar terminal device.

The accessing a short subframe service means that the UE can obtain a short subframe service provided by a base station, and exchange data of the short subframe service with the base station. The data includes control data and service data.

Optionally, before this random access procedure of UE for a short subframe service is started, data transmission between the UE and the base station may be performed in normal subframes, that is, in transmission resources corresponding to 1 ms subframes. In this case, a short subframe service is triggered by using the random access procedure. Alternatively, data transmission between the UE and the base station may be performed in short subframes, and in this case, another type of short subframe service may be performed by using the random access procedure.

As shown in FIG. 2, the method includes steps S201 to S202.

S201: UE sends, to a base station, a random access request message carrying short subframe service information, where the short subframe service information indicates that the UE is to perform a short subframe service after a random access procedure is triggered, and duration of a short subframe is less than 1 millisecond.

The performing a short subframe service means transmission of data of the short subframe service between the UE and the base station. Optionally, the performing a short subframe service after a random access procedure is triggered may be that the transmission of the data of the short subframe service may be started during an ongoing process of the random access procedure, for example, performed after transmission of the random access request message is complete, or after some steps of the random access procedure are complete, or that the transmission of the data of the short subframe service may be started after the entire random access procedure is complete. This is not limited in this embodiment of the present invention.

Optionally, the duration of the short subframe may be any value greater than zero and less than 1 millisecond, for example, may be 0. 1 milliseconds, 0.2 milliseconds, 0.5 milliseconds, or a length of 1 to 7 OFDM symbols. Specifically, the duration may be determined according to a service type and a service requirement of a short-delay service. This is not specially limited in this embodiment of the present invention.

S202: The UE and the base station exchange rest messages of the random access procedure after transmission of the random access request message is complete, where the rest messages are transmitted over a resource corresponding to the short subframe service, and the resource includes a time domain resource and a frequency domain resource that are configured by the base station for the UE to perform the short subframe service.

It can be understood that the time domain resource and the frequency domain resource are physical layer resources and the resource corresponding to the short subframe service may further include an upper layer resource, including a logical channel, a transmission channel, and other resources.

Optionally, that the base station configures the time domain resource and the frequency domain resource for the UE to perform the short subframe service includes that the base station sends, after receiving the random access request message sent by the UE, a random access parameter to the UE, where the random access parameter is used to indicate a time domain resource and a frequency domain resource that are available when the UE sends the data of the short subframe service.

Specifically, S202 may include S2021 to S2024.

S2021: The base station sends control information to the UE by using a downlink control channel, where a physical resource of the downlink control channel is corresponding to the short subframe service.

For example, in a random access procedure corresponding to a normal subframe service, a downlink control channel occupies a time domain resource of 1 to 3 OFDM symbols, and a delay of each OFDM symbol is approximately 0.07 ms. Therefore, a transmission delay of the control information is 0.07 ms to 0.21 ms. A downlink control channel corresponding to a short subframe service occupies a time-frequency resource of 1 to 3 symbols corresponding to a short subframe, and a transmission delay of control information is corresponding to duration of the symbols corresponding to a short subframe. For example, duration of a short subframe is 0.2 ms, each short subframe contains 10 symbols, and a delay of each symbol corresponding to a short subframe is 0.02 ms. Therefore, a transmission delay of the control information is 0.02 ms to 0.06 ms. It should be noted that, in this example, the quantity of downlink control channels and the quantity of symbols contained in a short subframe are both examples for illustration, and configurations required in an actual service prevail. S2022: The base station sends a random access response message to the UE.

S2023: The UE sends a radio resource control connection request message to the base station.

S2024: The base station confirms that an RRC connection is established and sends an acknowledgement message to the UE.

Similar to S2021, all types of messages in S2022 to S2024 may also be transmitted over a resource corresponding to the short subframe service, so as to reduce a transmission delay, and details are not further described herein.

According to the invention, before step S201, the method further includes step S200:
the UE receives a broadcast message broadcast by the base station, where the broadcast message includes information about a time domain resource and a frequency domain resource that are configured by the base station for the UE to perform the random access procedure. Specifically, the time domain resource and the frequency domain resource for the random access procedure may be a time-frequency resource of a PRACH bearing the random access request message of the UE.

In the random access method provided in this embodiment of the present invention, UE sends, to a base station, a random access request message carrying short subframe service information. The short subframe service information indicates that the UE is to perform a short subframe service after a random access procedure is triggered, and duration of a short subframe is less than 1 millisecond. After transmission of the random access request message is complete, the UE and the base station exchange rest messages of the random access procedure over a resource corresponding to the short subframe service. Design of a shorter random access procedure reduces a delay for UE to enter an active state from an idle state, so as to reduce a time required for an entire random access procedure. A delay requirement of a short-delay service is met.

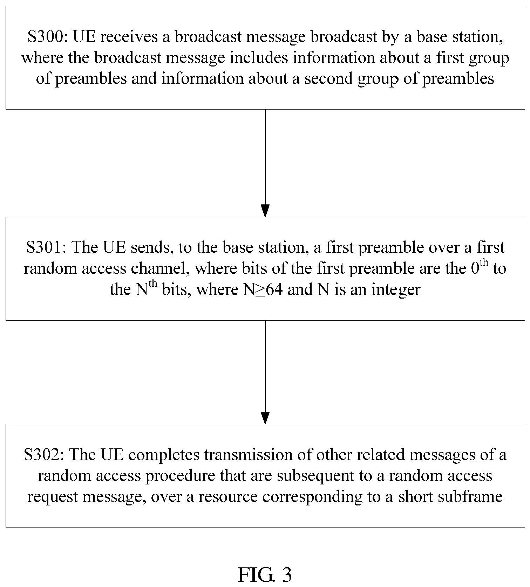

As shown in FIG. 3, an embodiment of the present invention further provides a random access method, including steps S301 to S302.

S301: UE sends, to a base station, a first preamble over a first random access channel, where bits of the first preamble are the 0^{th} to the N^{th} bits, where N≥64 and N is an integer.

The first preamble includes a first group of preambles and a second group of preambles, where the first group of preambles includes the 0^{th} to the 63^{rd} bits of preambles, the second group of preambles includes the 64^{th} to the N^{th} bits of preambles, and the second group of preambles is used by the base station to determine that the UE is to perform a short subframe service after a random access procedure is triggered.

Specifically, the UE uses a PRACH of an LTE system to send a random access request message to the base station. That is, a time-frequency resource of a PRACH bearing the first random access channel is the same as a time-frequency resource of a PRACH used by the UE to access a normal subframe service in a random access procedure. A 64-bit preamble sequence used in the LTE system is maintained, and based on this, a preamble is added as an extension. The extensional preamble is used to indicate a short subframe service. A bit quantity of the extensional preamble may be adjusted according to a quantity of short subframe users. A larger quantity of users leads to a larger quantity of extensional bits. This is to resolve a collision problem that may occur during simultaneous access of multiple UEs.

Optionally, the base station may use different sequences to define and differentiate the first group of preambles and the second group of preambles. Particularly, a particular sequence is used to indicate a short subframe service. In this way, after receiving the second group of preambles sent by the UE, the base station can tell that the UE is to perform a short subframe service.

S302: The UE completes transmission of other related messages of a random access procedure that are subsequent to a random access request message, over a resource corresponding to a short subframe.

It can be understood that, time required for the subsequent process of the random access procedure is calculated on a basis of duration of a short subframe.

For an execution order and specific content of the other random access steps, reference may be made to the descriptions in the embodiment shown in FIG. 2, and details are not described herein again.

According to the invention, before S301, the method further includes step S300: the UE receives a broadcast message broadcast by the base station, where the broadcast message includes information about the first group of preambles and information about the second group of preambles.

Optionally, the broadcast message includes indication information. The indication information may be sent in a form of an information element (information element, IE), and the indication information is used to determine a corresponding location of each bit of preamble in the second group of preambles. In this case, for UE not supporting a short-delay service of a 5G system, although the information about the second group of preambles cannot be recognized, the information about the first group of preambles can still be received and parsed. UE supporting a short-delay service of a 5G communications system, however, can recognize and parse the information about the first group of preambles and the information about the second group of preambles, and can determine whether to add the second group of preambles to a to-be-sent preamble according to a service requirement.

Optionally, the first group of preambles may further be divided into a group A and a group B. That is, a sum of quantities of preamble bits in the group A and the group B is 64 bits, that is, the 0^{th} to the 63^{rd} bits of preambles. The second group of preambles may be denoted by a group C which includes the 64^{th} to the N^{th} bits of preambles. Information about the group A may be delivered to the UE in the broadcast message, and the UE may derive content of the group B according to the information about the group A.

Optionally, the broadcast message may be delivered in a form of a system information block (system information block, SIB), for example, may be a SIB2 message specified for use by the LTE system.

Optionally, S300 may be replaced with S300' which includes: the UE receives system information broadcast by the base station, where the system information is used to separately indicate random access information related to a short subframe service.

The system information includes indication information that is used to indicate a time-frequency resource allocated by the base station for the random access procedure of the UE, and the time-frequency resource includes the time-frequency resource of the PRACH bearing the first random access channel. The system information may further include a parameter related to uplink power control and other information. The system information further includes information related to the second group of preambles.

The system information may be a piece of system information added by the base station in addition to the SIB2 message.

In the random access method described in this embodiment of the present invention, an extensional preamble is used in a random access request phase to indicate that UE is to access a short subframe service, and then an entire random access procedure is completed over a resource corresponding to the short subframe service. In this way, a delay of the random access procedure is reduced, and a delay requirement of a short-delay service is met. Further, the method in this embodiment, on the one hand, maintains compatibility with a random access procedure of an LTE system, and on the other hand, can obtain sufficient extensional preambles for short subframe services, so as to resolve a random access collision problem that may occur during simultaneous access of multiple UEs.

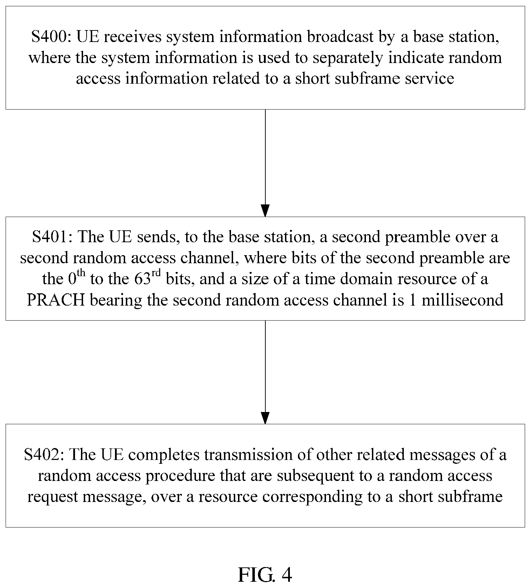

As shown in FIG. 4, an embodiment of the present invention further provides a random access method, including steps S401 to S403.

S401: UE sends, to a base station, a second preamble over a second random access channel, where bits of the second preamble are the 0^{th} to the 63^{rd} bits, and a size of a time domain resource of a PRACH bearing the second random access channel is 1 millisecond.

A location of a time domain resource and/or a frequency domain resource of the PRACH bearing the second random access channel is different from that of a normal PRACH. The normal PRACH is a physical random access channel used in a random access procedure for access to a normal subframe service. The location of the time domain resource and/or the frequency domain resource is used by the base station to determine that the UE is to perform a short subframe service after a random access procedure is triggered.

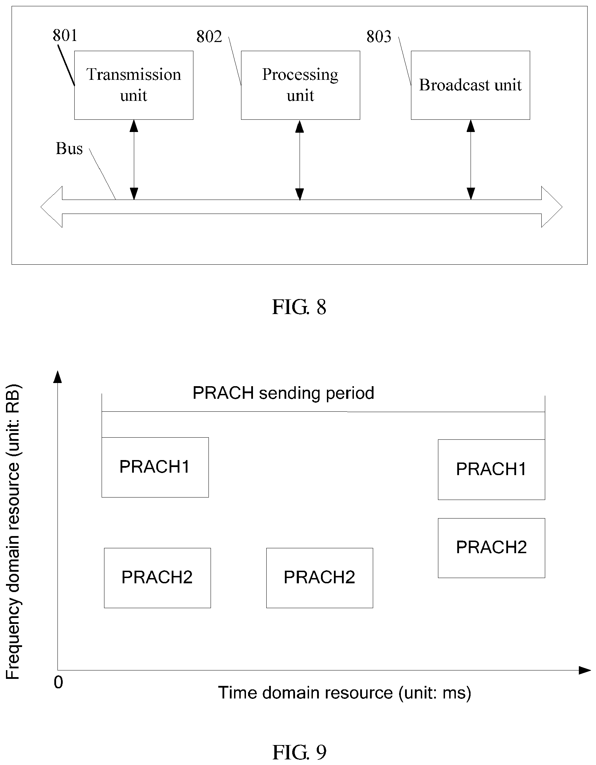

Specifically, a location of a time-frequency resource configured for the second random access channel is illustrated by using a resource configuration diagram (shown in FIG. 9). As shown in the figure, a horizontal axis represents time domain resources, and a vertical axis represents frequency domain resources. A PRACH1 represents a physical random access channel bearing a normal physical random access channel, and a rectangular marked by a PRACH1 represents a sum of resources occupied by the PRACH1. A PRACH2 represents a physical random access channel bearing the second random access channel. In a sending period of a PRACH1, a PRACH2 may be set at any location. As shown in the figure, a PRACH2 may be set not at a same frequency domain resource location but at a same time domain resource location as a PRACH1. Optionally, not shown in the figure, a PRACH2 may alternatively be set not at a same time-frequency resource location and not at a same frequency domain resource location as a PRACH1, or not at a same time-frequency resource location but at a same frequency domain resource location as a PRACH1.

To maintain compatibility with an LTE system, sizes of the time domain resource and the frequency domain resource of the PRACH bearing the second random access channel remain the same as those of a PRACH bearing a normal physical random access channel, and the time domain resource is 1 ms, that is, duration of a normal subframe. In addition, a 64-bit preamble sequence specified for the LTE system is used as the second preamble.

S402: The UE completes transmission of other related messages of a random access procedure that are subsequent to a random access request message, over a resource corresponding to a short subframe.

The UE may obtain the resource corresponding to a short subframe from a random access parameter sent by the base station. For example, a frequency domain resource and a time domain resource used to transmit data of a short subframe service are respectively defined in a PRACH-FrequencyOffset (PRACH frequency offset) and a PRACH-ConfigurationIndex (PRACH configuration index). The random access parameter may further carry random access resource information of the random access procedure for access to the short subframe service. That is, after the random access procedure ends, all messages, including the random access request message, of the random access procedure for the short subframe service may be transmitted in the resource corresponding to a short subframe.

For an execution order and specific content of the other random access steps, reference may be made to the descriptions in the embodiment shown in FIG. 2, and details are not described herein again.

Optionally, before S401, the method may further include S400: the UE receives system information broadcast by the base station, where the system information is used to separately indicate random access information related to a short subframe service.

The system information includes indication information that is used to indicate a time-frequency resource allocated by the base station for the random access procedure of the UE, and the time-frequency resource includes the time-frequency resource of the PRACH bearing the second random access channel. The system information may further include a parameter related to uplink power control and other information.

The system information may be a piece of system information added by the base station in addition to a SIB2 message.

Optionally, to improve a probability of random access and reduce waiting time, a configuration frequency of random access resources may be increased. A maximum frequency may be so designed that one foregoing PRACH is configured every 1 ms. The corresponding information may be modified in a related random access parameter, such as the PRACH-frequencyoffset or PRACH-ConfigurationIndex parameter.

By sending a preamble over a random access channel in which a physical layer resource is reconfigured, and completing a subsequent process of the random access procedure over a time-frequency resource corresponding to a short subframe, duration of a short subframe has immediate effects on a delay of the entire random access procedure. It can be learned from testing that, a delay in sending a random access request message is approximately 1 ms, and a delay of subsequent steps is calculated on a basis of duration of a short subframe. If the duration of the short subframe is designed to be 0.5 ms, the delay of the subsequent steps is approximately 15 ms, and a total delay is 16 ms. If the duration of the short subframe is designed to be 0.1 ms, the delay of the subsequent steps is approximately 3 ms, and a total delay is 4 ms. If the duration of the short subframe is between 0.1 ms and 0.5 ms, a total delay is between 4 ms and 16 ms.

In the random access method provided in this embodiment of the present invention, by re-configuring a physical layer resource of a PRACH, a physical layer time domain location and/or frequency domain location of a physical layer random access resource of a short subframe service is staggered from that of a random access resource of a normal subframe service, that UE is to access a short subframe service is indicated in a random access request phase, and an entire random access procedure is completed over a resource corresponding to the short subframe service. In this way, a delay of the random access procedure is reduced, and a delay requirement of a short-delay service is met. Using the method in this embodiment can maintain compatibility with an LTE system, and reduce an air interface delay.

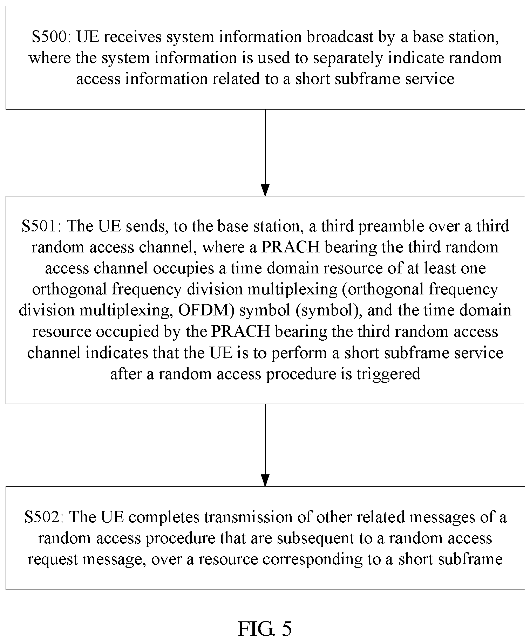

As shown in FIG. 5, an embodiment of the present invention further provides a random access method, including steps S500 to S502.

S500: UE receives system information broadcast by a base station, where the system information is used to separately indicate random access information related to a short subframe service.

Specifically, the base station may add a piece of system information in addition to a SIB2 message, and delivers the system information to the UE in a broadcast manner. The system information includes indication information that is used to indicate a time-frequency resource allocated for a random access procedure, including a time-frequency resource of a PRACH bearing the following third random access channel. The system information may further include a parameter related to uplink power control and other information.

It can be understood that in this embodiment of the present invention, after discovering a cell served by the base station, the UE may periodically receive the system information broadcast by the base station.

S501: The UE sends, to the base station, a third preamble over a third random access channel, where a PRACH bearing the third random access channel occupies a time domain resource of at least one orthogonal frequency division multiplexing (orthogonal frequency division multiplexing, OFDM) symbol (symbol), and the time domain resource occupied by the PRACH bearing the third random access channel indicates that the UE is to perform a short subframe service after a random access procedure is triggered.

For example, the PRACH bearing the third random access channel may occupy a time domain resource of 2 OFDM symbols and a frequency domain resource of 6 RBs, or may occupy a time domain resource of 1 OFDM symbol and a frequency domain resource of 12 RBs. If a time domain resource of 1 OFDM symbol and a frequency domain resource of 12 RBs are used, more frequency domain resources can be used to bear preambles of a same information volume while a preamble of a configuration 4 is not changed, so as to further shorten a preamble sending delay.

Specifically, there are five types of configurations of random sequence time domain resources in an LTE system, denoted by a configuration 0, a configuration 1, ..., and the configuration 4, and each configuration has a different size of time domain resource. The configuration 4 is a special configuration for time division duplex (time division duplex, TDD), where a PRACH occupies only a time domain resource of 2 OFDM symbols and a frequency domain resource of 6 RBs. In this embodiment, a preamble of the configuration 4 is used as the third preamble. Optionally, if only one random access resource is configured in a 1 ms frame, that is, the UE is allowed to send one random access request message every 1 ms, the third random access channel bearing the third preamble may be configured in the last two OFDM symbols of the 1 ms, so that after the random access procedure is complete, the short subframe service may be performed immediately.

S502: The UE completes transmission of other related messages of a random access procedure that are subsequent to a random access request message, over a resource corresponding to a short subframe.

For an execution order and specific content of the other random access steps, reference may be made to related descriptions in another embodiment of the present invention, and details are not described herein again.

In this embodiment of the present invention, the base station carries related information of a configuration 4 in a random access parameter sent to the UE, to indicate that the UE may use a preamble sequence of the configuration 4 as a preamble of a random access request procedure for access to a short-delay service. The UE determines, according to its own need, that is, according to whether a short subframe service is to be performed, whether to use the preamble sequence of the configuration 4 as a preamble to send a random access request message. In this way, the base station may learn, according to a configuration manner of the received preamble, that the UE is to perform a short subframe service, and further transmission of rest messages of the random access procedure is performed over a time-frequency resource corresponding to the short subframe service, reducing a delay of the random access procedure.

Optionally, a configuration 5 may be added to the 5 types of configurations, and a short subframe service is indicated by the configuration 5. Specifically, to not increase frequency domain resources and to reduce a delay, a shorter preamble must be configured as a preamble sequence corresponding to the configuration 5. The base station may add a related indication in broadcast system information to indicate to the UE that a preamble using the configuration 5 may be used as a preamble of the current random access to indicate a short subframe service.

Optionally, a configuration frequency of the third random access channel may be increased. A maximum frequency is that the third access channel is fully configured in a time domain resource available to the third random access channel. Different quantities of third random access channels are configured according to different time domain resources of a short subframe, and this is not limited in this embodiment of the present invention. For example, if the random access channel occupies a time domain resource of 2 OFDM symbols, which are equivalent to duration of approximately 0.14 ms, less than 3 third random access channels may be configured in each 0.5 ms short subframe. If a full configuration is selected, 3 third random access channels may be configured. Only 1 third random access channel can be configured in each 0.2 ms short subframe. By increasing a frequency of sending the random access request message, a random access waiting delay can be reduced, and a success rate of random access can be increased, so as to reduce the delay of the entire random access procedure.

Optionally, the third preamble may use a 64-bit preamble specified in the existing LTE system, or the preamble, extended to N bits, shown in the embodiment of FIG. 2. If the preamble extended to N bits is used, the base station may determine, according to a sequence configuration or a bit quantity of the third preamble, that the UE is to access a short subframe service. Specific reference may be made to related descriptions of another embodiment of the present invention, and details are not described herein again.

Optionally, a location of the time-frequency resource of the PRACH in which the third preamble is located may be the same as or different from a location of a time-frequency resource of a PRACH used by the UE to access a normal subframe service in a random access procedure. If a different time-frequency resource location is used, the base station may determine, according to the time-frequency resource location of the third preamble, that the UE is to access a short subframe service. Specific reference may be made to related descriptions of another embodiment of the present invention, and details are not described herein again.

In the random access method described in this embodiment of the present invention, a preamble sequence of a particular configuration is used in a random access request phase to indicate that UE is to access a short subframe service, and further an entire random access procedure is completed over a resource corresponding to the short subframe service. In this way, a delay of the random access procedure is reduced, and a delay requirement of a short-delay service is met.

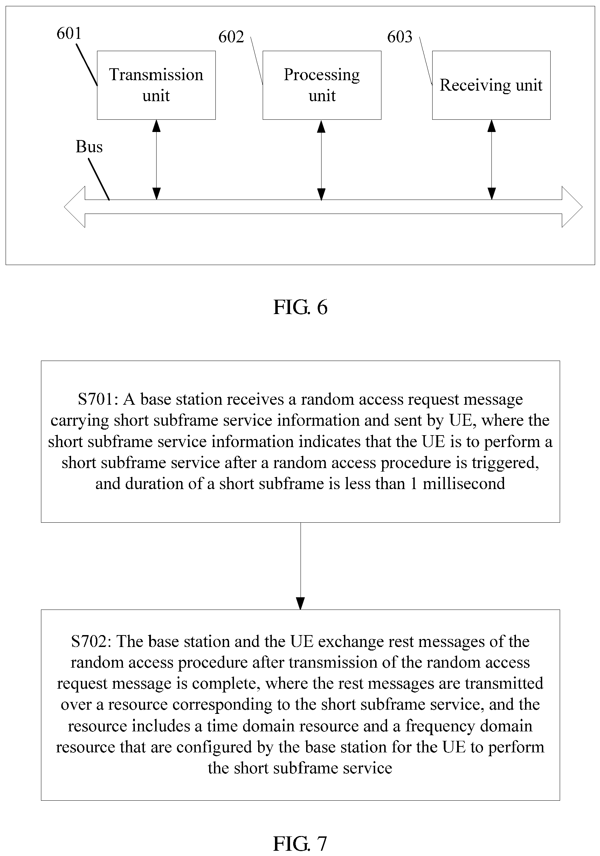

FIG. 6 is a schematic structural diagram of UE according to an embodiment of the present invention. The UE may be configured to access a short subframe service.

The UE includes a transmission unit 601, a processing unit 602, and a receiving unit 603. As shown in FIG. 6, the units may be connected by using a bus. As not shown in FIG. 6, the units may alternatively be connected by using another direct or indirect connection manner. This is not specially limited in this embodiment of the present invention.

The transmission unit 601 is configured to send, to a base station, a random access request message carrying short subframe service information, where the short subframe service information indicates that the UE is to perform a short subframe service after a random access procedure is triggered, and duration of a short subframe is less than 1 millisecond.

The performing a short subframe service means transmission of data of the short subframe service between the UE and the base station. Optionally, the performing a short subframe service after a random access procedure is triggered may be that the transmission of the data of the short subframe service may be started during an ongoing process of the random access procedure, for example, performed after transmission of the random access request message is complete, or after some steps of the random access procedure are complete, or that the transmission of the data of the short subframe service may be started after the entire random access procedure is complete. This is not limited in this embodiment of the present invention.

Optionally, the duration of the short subframe may be any value greater than zero and less than 1 millisecond, for example, may be 0.1 milliseconds, 0.2 milliseconds, or 0.5 milliseconds. Specifically, the duration may be determined according to a service type and a service requirement of a short-delay service. This is not specially limited in this embodiment of the present invention.

The processing unit 602 is configured to instruct, after transmission of the random access request message is complete, the transmission unit 601 to transmit rest messages of the random access procedure over a resource corresponding to the short subframe service, where the resource includes a time domain resource and a frequency domain resource that are configured by the base station for the UE to perform the short subframe service.

It can be understood that the time domain resource and the frequency domain resource are physical resources and the resource corresponding to the short subframe service may further include an upper layer resource, including a logical channel, a transmission channel, and other resources.

Specifically, the rest messages of the random access procedure include downlink channel control information, a random access response message, a radio resource control connection request message, an acknowledgement message, and the like. For descriptions of a transmission procedure of the messages, reference may be made to descriptions of another embodiment of the present invention, and details are not described herein again.

Optionally, the UE may further include the receiving unit 603, configured to receive a random access parameter sent by the base station, where the random access parameter is used to indicate a time domain resource and a frequency domain resource that are available when the UE sends data of the short subframe service.

According to the invention, the receiving unit 603 is further configured to receive a broadcast message broadcast by the base station, where the broadcast message includes information about a time domain resource and a frequency domain resource that are configured by the base station for the UE to perform the random access procedure.

According to the UE provided in this embodiment of the present invention, the UE sends, to a base station, a random access request message carrying short subframe service information, where the short subframe service information indicates that the UE is to perform a short subframe service after a random access procedure is triggered, and duration of a short subframe is less than 1 millisecond. After transmission of the random access request message is complete, the UE and the base station exchange rest messages of the random access procedure over a resource corresponding to the short subframe service. Design of a shorter random access procedure reduces a delay for UE to enter an active state from an idle state, so as to reduce a time required for an entire random access procedure. A delay requirement of a short-delay service is met.

Optionally, in another embodiment of the present invention, the transmission unit 601 may be specifically configured to send, to the base station, a first preamble over a first random access channel, where bits of the first preamble are the 0^{th} to the N^{th} bits, where N≥64 and N is an integer.

The first preamble includes a first group of preambles and a second group of preambles, where the first group of preambles includes the 0^{th} to the 63^{rd} bits of preambles, the second group of preambles includes the 64^{th} to the N^{th} bits of preambles, and the second group of preambles is used by the base station to determine that the UE is to perform a short subframe service after a random access procedure is triggered.

For specific content, a formation manner, and a sending process of the first preamble, reference may be made to related descriptions in another embodiment of the present invention, and details are not described herein again.

Optionally, the receiving unit 603 may be specifically configured to receive a broadcast message broadcast by the base station, where the broadcast message includes information about the first group of preambles and information about the second group of preambles.

Optionally, the base station may add one piece of indication information to the broadcast message. The indication information may be sent in a form of an information element (information element, IE), and the indication information is used to determine a corresponding location of each bit of preamble in the second group of preambles. For specific descriptions, reference may be made to related content in another embodiment of the present invention, and details are not described herein again.

Optionally, the receiving unit 603 may be specifically configured to receive system information broadcast by the base station, where the system information is used to separately indicate random access information related to the short subframe service. The system information includes indication information that is used to indicate a time-frequency resource allocated by the base station for the random access procedure of the UE, and the time-frequency resource includes a time-frequency resource of a PRACH bearing the first random access channel. The system information may further include a parameter related to uplink power control and other information. The system information further includes information related to the second group of preambles.

By using an extensional preamble in a random access request phase to indicate that UE is to access a short subframe service, an entire random access procedure is completed over a resource corresponding to the short subframe service. In this way, a delay of the random access procedure is reduced, and a delay requirement of a short-delay service is met. Further, using the UE in this embodiment, on the one hand, maintains compatibility with a random access procedure of an LTE system, and on the other hand, can obtain sufficient extensional preambles for short subframe services, so as to resolve a random access collision problem that may occur during simultaneous access of multiple UEs.

Optionally, in another embodiment of the present invention, the transmission unit 601 may be specifically configured to send, to the base station, a second preamble over a second random access channel, where bits of the second preamble are the 0^{th} to the 63^{rd} bits, and a size of a time domain resource of a PRACH bearing the second random access channel is 1 millisecond.

A location of a time domain resource and/or a frequency domain resource of the PRACH bearing the second random access channel is different from that of a normal PRACH. The normal PRACH is a physical random access channel used in a random access procedure for access to a normal subframe service. The location of the time domain resource and/or the frequency domain resource is used by the base station to determine that the UE is to perform the short subframe service after the random access procedure is triggered.

For specific descriptions of the time-frequency resource configured for the second random access channel, reference may be made to content of another embodiment of the present invention, and details are not described herein again.

To maintain compatibility with an LTE system, sizes of the time domain resource and the frequency domain resource of the PRACH bearing the second random access channel remain the same as those of a PRACH bearing a normal physical random access channel, and the time domain resource is 1 ms, that is, duration of a normal subframe. In addition, a 64-bit preamble sequence specified for the LTE system is used as the second preamble.

Optionally, the receiving unit 603 may be further configured to receive a random access parameter sent by the base station, so as to obtain a frequency domain resource and a time domain resource that are needed to transmit data of the short subframe service. The random access parameter may further carry random access resource information of the random access procedure for access to the short subframe service. That is, after the random access procedure ends, all messages, including the random access request message, of the random access procedure for the short subframe service may be transmitted in the resource corresponding to a short subframe.

Optionally, the receiving unit 603 may be specifically configured to receive system information broadcast by the base station, where the system information is used to separately indicate random access information related to the short subframe service.

The system information is used to indicate a time-frequency resource allocated for the random access procedure, include the time-frequency resource of the PRACH bearing the second random access channel. Specific reference may be made to related descriptions of another embodiment of the present invention, and details are not described herein again.

Optionally, to improve a probability of random access and reduce waiting time, a configuration frequency of random access resources may be increased. Specific reference may be made to related content of another embodiment of the present invention, and details are not described herein again.

By re-configuring a physical layer resource of a PRACH, a physical layer time domain location and/or frequency domain location of a physical layer random access resource of a short subframe service is staggered from that of a random access resource of a normal subframe service, that UE is to access a short subframe service is indicated in a random access request phase, and an entire random access procedure is completed over a resource corresponding to the short subframe service. In this way, a delay of the random access procedure is reduced, and a delay requirement of a short-delay service is met. Further, using the UE in this embodiment can maintain compatibility with an LTE system, and reduce an air interface delay.

Optionally, in another embodiment of the present invention, the transmission unit 601 may be specifically configured to send, to the base station, a third preamble over a third random access channel, where a PRACH bearing the third random access channel occupies a time domain resource of at least one OFDM symbol, and the time domain resource occupied by the PRACH bearing the third random access channel indicates that the UE is to perform the short subframe service after the random access procedure is triggered.

For example, the PRACH bearing the third random access channel may occupy a time domain resource of 2 OFDM symbols and a frequency domain resource of 6 RBs, or may occupy a time domain resource of 1 OFDM symbol and a frequency domain resource of 12 RBs. If a time domain resource of 1 OFDM symbol and a frequency domain resource of 12 RBs are used, more frequency domain resources can be used to bear preambles of a same information volume while a preamble of a configuration 4 is not changed, so as to further shorten a preamble sending delay.

For descriptions of a manner of selecting the time domain resource of the PRACH bearing the third random access channel, reference may be made to related content of another embodiment of the present invention, and details are not described herein again.

The receiving unit 603 may be specifically configured to receive system information delivered in a broadcast manner by the base station, where the system information is used to separately indicate random access information related to the short subframe service.

The system information includes indication information that is used to indicate a time-frequency resource allocated for the random access procedure, including a time-frequency resource of the PRACH bearing the third random access channel. Specific reference may be made to related descriptions of another embodiment of the present invention, and details are not described herein again.

Optionally, a configuration frequency of the third random access channel may be increased. A maximum frequency is that the third access channel is fully configured in a time domain resource available to the third random access channel. Different quantities of third random access channels are configured according to different time domain resources of a short subframe, and this is not limited in this embodiment of the present invention. Specific reference may be made to related content of another embodiment of the present invention, and details are not described herein again.

Optionally, the third preamble may use a 64-bit preamble specified in the existing LTE system, or the preamble, extended to N bits, shown in the embodiment of FIG. 2. If the preamble extended to N bits is used, the base station may determine, according to a sequence configuration or a bit quantity of the third preamble, that the UE is to access a short subframe service. Specific reference may be made to related descriptions of another embodiment of the present invention, and details are not described herein again.

Optionally, a location of the time-frequency resource of the PRACH in which the third preamble is located may be the same as or different from a location of a time-frequency resource of a PRACH used by the UE to access a normal subframe service in a random access procedure. If a different time-frequency resource location is used, the base station may determine, according to the time-frequency resource location of the third preamble, that the UE is to access a short subframe service. Specific reference may be made to related descriptions of another embodiment of the present invention, and details are not described herein again.

According to the UE provided in this embodiment of the present invention, a preamble sequence of a particular configuration is used in a random access request phase to indicate that the UE is to access a short subframe service, and further an entire random access procedure is completed over a resource corresponding to the short subframe service. In this way, a delay of the random access procedure is reduced, and a delay requirement of a short-delay service in a 5G communications system is met.

Optionally, in another embodiment of the present invention, the function of the transmission unit 601 may be implemented by a transmitter.

Optionally, in another embodiment of the present invention, the function of the processing unit 602 may be implemented by a processor.

Optionally, in another embodiment of the present invention, the function of the receiving unit 603 may be implemented by a receiver.

Optionally, the functions of the receiver and the transmitter may be implemented by a transceiver. This is not specially limited in this embodiment of the present invention.

FIG. 7 is a schematic flowchart of a random access method according to an embodiment of the present invention. The method is used to access a short subframe service, and the method includes steps S701 to S702.

S701: A base station receives a random access request message carrying short subframe service information and sent by UE, where the short subframe service information indicates that the UE is to perform a short subframe service after a random access procedure is triggered, and duration of a short subframe is less than 1 millisecond.

S702: The base station and the UE exchange rest messages of the random access procedure after transmission of the random access request message is complete, where the rest messages are transmitted over a resource corresponding to the short subframe service, and the resource includes a time domain resource and a frequency domain resource that are configured by the base station for the UE to perform the short subframe service.

Optionally, after transmission of the random access request message is complete, the base station sends a random access parameter to the UE. The random access parameter is used to indicate a time domain resource and a frequency domain resource that are available when the UE sends data of the short subframe service.

According to the invention, the method further includes step S700 which includes: the base station broadcasts system information to the UE, where the broadcast message includes information about the time domain resource and the frequency domain resource that are configured for the UE to perform the random access procedure.

For more descriptions of the random access method provided in the embodiment shown in FIG. 7, reference may be made to related content of another embodiment of the present invention, and details are not described herein again.

FIG. 8 is a schematic structural diagram of a base station according to an embodiment of the present invention. The base station may be configured to provide a short subframe service for UE.

The base station includes a transmission unit 801, a processing unit 802, and a broadcast unit 803. As shown in FIG. 8, the units may be connected by using a bus. As not shown in FIG. 8, the units may be connected by using another direct or indirect connection manner. This is not specially limited in this embodiment of the present invention.

The transmission unit 801 is configured to receive a random access request message carrying short subframe service information and sent by user equipment UE, where the short subframe service information indicates that the UE is to perform a short subframe service after a random access procedure is triggered, and duration of a short subframe is less than 1 millisecond.

The processing unit 802 is configured to instruct, after transmission of the random access request message is complete, the transmission unit 801 to transmit rest messages of the random access procedure over a resource corresponding to the short subframe service, where the resource includes a time domain resource and a frequency domain resource that are configured by the base station for the UE to perform the short subframe service.

Optionally, the transmission unit 801 may be further configured to send a random access parameter to the UE, where the random access parameter is used to indicate a time domain resource and a frequency domain resource that are available when the UE sends data of the short subframe service.

According to the invention, the base station further includes the broadcast unit 803, configured to broadcast a broadcast message to the UE, where the broadcast message includes information about the time domain resource and the frequency domain resource that are configured for the UE to perform the random access procedure.

For more descriptions of the base station provided in the embodiment shown in FIG. 8, reference may be made to related content of another embodiment of the present invention, and details are not described herein again.

Optionally, in another embodiment of the present invention, the function of the transmission unit 801 may be implemented by a receiver.

Optionally, in another embodiment of the present invention, the function of the processing unit 802 may be implemented by a processor.

Optionally, in another embodiment of the present invention, the function of the broadcast unit 803 may be implemented by a transmitter.

Optionally, the functions of the receiver and the transmitter may be implemented by a transceiver. This is not specially limited in this embodiment of the present invention.

According to the random access method and the base station that are provided in the foregoing embodiments, UE sends, to the base station, a random access request message carrying short subframe service information, where the short subframe service information indicates that the UE is to perform a short subframe service after a random access procedure is triggered, and duration of a short subframe is less than 1 millisecond. After transmission of the random access request message is complete, the UE and the base station exchange rest messages of the random access procedure over a resource corresponding to the short subframe service. Design of a shorter random access procedure reduces a delay for UE to enter an active state from an idle state, so as to reduce a time required for an entire random access procedure. A delay requirement of a short-delay service is met.

It can be understood that the processor descried in the embodiments of the present invention may be a general purpose processor, a digital signal processor (DSP), an application-specific integrated circuit (ASIC), a field programmable gate array (FPGA) or another programmable logic device, a discrete gate or transistor logic device, or a discrete hardware component, and may implement or execute the methods, steps and logic block diagrams disclosed in the embodiments of the present invention. The general purpose processors may be a microprocessor, or the processor may be any conventional processor, decoder, or the like.

It can be understood that the apparatuses provided in the embodiments of the present invention are corresponding to the method embodiments. Therefore, the apparatuses are not limited to the foregoing structural units, and a new structural unit may be generated according to the procedures in the methods. Details are not further described herein. Further, the structural units of the apparatuses provided in the embodiments of the present invention may exist independently, or may be integrated together, and this is not limited herein.

A person skilled in the art can fully understand that mutual reference may be made between the embodiments of the present invention. For example, the apparatus provided in the embodiment shown in FIG. 6 or FIG. 7 may execute any random access method shown in FIG. 2 to FIG. 5, and the random access methods in the embodiments shown in FIG. 2 to FIG.
5 may be executed by the apparatus provided in the embodiment shown in FIG. 6 or FIG. 7. For ease and clarity of description, for functions of the units of the apparatuses provided in the embodiments of the present invention, reference may be made to corresponding steps in the method embodiments, and details are not further described.

It can be understood that, "first", "second", "third", and like descriptions in the embodiments of the present invention are used only to differentiate objects, and do not imply any execution order or indicate superiority of the executed objects. These terms do not constitute any limitation on the embodiments of the present invention.

The steps of the methods disclosed with reference to the embodiments of the present invention may be directly executed and completed by a hardware decoding processor, or may be executed and completed by using a combination of hardware in a decoding processor and a software module. The software module may be located in a mature storage medium in the art, such as a random access memory, a flash memory, a read-only memory, a programmable read-only memory, an electrically erasable programmable memory, a register, or the like. The storage medium is located in a memory, and a decoding unit reads information in the memory and completes the steps in the foregoing methods together with hardware of the decoding unit.

From descriptions of the foregoing embodiments, a person skilled in the art may clearly understand that the present invention may be implemented by hardware, firmware or a combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that facilitates transfer of a computer program from one place to another. The storage medium may be any available medium accessible by a computer. For example, without any limitation imposed, the computer-readable medium may include a RAM, a ROM, an EEPROM, a CD-ROM or another optical disc storage, a disk storage medium or another magnetic storage device, or any other medium that can carry or store expected program code in an instruction or data structure form and can be accessed by a computer. In addition, any connection may be appropriately defined as a computer-readable medium. For example, if software is transmitted from a website, a server or another remote source by using a coaxial cable, an optical fiber/cable, a twisted pair, a digital subscriber line (DSL) or wireless technologies such as infrared ray, radio and microwave, the coaxial cable, optical fiber/cable, twisted pair, DSL or wireless technologies such as infrared ray, radio and microwave are included in a definition of the medium. For example, the disk (Disk) and disc (disc) used in the present invention includes a compact disc (CD), a laser disc, an optical disc, a digital versatile disc (DVD), a floppy disk, and a Blu-ray disc, where the disk generally replicates data magnetically, and the disc replicates data optically by using a laser. A combination of the foregoing should also be included in the protection scope of the computer-readable medium.

## Claims

1. A random access method, comprising:
sending (S201), by a user equipment, UE, a random access request message to a base station, wherein the random access request message carries short subframe service information, the short subframe service information indicates that a short subframe service is to be performed by the UE, after a random access procedure is triggered, and duration of a short subframe is less than 1 millisecond; and
transmitting (S202), by the UE, rest messages of the random access procedure after transmission of the random access request message, wherein the rest messages are transmitted over a resource corresponding to the short subframe service, and the resource comprises a time domain resource and a frequency domain resource that are configured by the base station for the UE to perform the short subframe service;
wherein before the sending a random access request message to a base station, the method further comprises:
receiving, by the user equipment, a broadcast message from the base station, wherein the broadcast message comprises information about a time domain resource and a frequency domain resource that are configured by the base station for performing the random access procedure by the UE.

2. The method according to claim 1, wherein the sending, by the UE, a random access request message to a base station comprises:
sending (S301), by the UE, a first preamble over a first random access channel to the base station, wherein bits of the first preamble are the 0^{th} to the N^{th} bits, wherein N≥64 and N is an integer.

3. The method according to claim 2, wherein
the first preamble comprises a first group of preambles and a second group of preambles, wherein the first group of preambles comprises the 0^{th} to the 63^{rd} bits of preambles, the second group of preambles comprises the 64^{th} to the N^{th} bits of preambles, and the second group of preambles is used by the base station to determine that the short subframe service is to be performed by the UE after the random access procedure is triggered.

4. The method according to claim 1, wherein the sending by the UE, a random access request message to a base station comprises:
sending (S401) a second preamble over a second random access channel to the base station, wherein bits of the second preamble are the 0^{th} to the 63^{rd} bits, and a size of a time domain resource of a physical random access channel bearing the second random access channel is 1 millisecond, wherein
a location of a time domain resource and/or a frequency domain resource of the physical random access channel bearing the second random access channel is different from that of a normal physical random access channel, the normal physical random access channel is a physical random access channel used in a random access procedure for access to a normal subframe service, and the location of the time domain resource and/or the frequency domain resource is used by the base station to determine that the short subframe service is to be performed by the UE after the random access procedure is triggered.

5. The method according to claim 1, wherein the sending by the UE, a random access request message to a base station comprises:
sending (S501) a third preamble over a third random access channel to the base station, wherein a physical random access channel bearing the third random access channel occupies a time domain resource of at least one orthogonal frequency division multiplexing OFDM symbol, and the time domain resource occupied by the physical random access channel bearing the third random access channel indicates that the short subframe service is to be performed after the random access procedure is triggered.

6. The method according to claim 5, wherein the method further comprises:
increasing by the UE, a configuration frequency of the third random access channel, wherein a maximum of the configuration frequency is that the third access channel is fully configured in a time domain resource available to the third random access channel.

7. The method according to any one of claims 1 to 6, wherein the method further comprises:
receiving by the UE, a random access parameter from the base station, wherein the random access parameter is used to indicate a time domain resource and a frequency domain resource that are available for sending data of the short subframe service.

8. A random access method, comprising:
receiving (S201), by a base station, from a user equipment, UE, a random access request message carrying short subframe service information, wherein the short subframe service information indicates that a short subframe service is to be perfomed after a random access procedure is triggered, and duration of a short subframe is less than 1 millisecond; and
transmitting (S202), by the base station, rest messages of the random access procedure after transmission of the random access request message, wherein the rest messages are transmitted over a resource corresponding to the short subframe service, and the resource comprises a time domain resource and a frequency domain resource that are configured by the base station for the UE to perform the short subframe service;
wherein before the receiving, from the UE, a random access request message carrying short subframe service information, the method further comprises:
broadcasting, by the base station, a broadcast message, wherein the broadcast message comprises information about the time domain resource and the frequency domain resource that are configured by the base station for performing the random access procedure.

9. The method according to claim 8, wherein the method further comprises:
sending by the base station, a random access parameter to the UE, wherein the random access parameter is used to indicate a time domain resource and a frequency domain resource that are available for sending data of the short subframe service.

10. The method according to any one of claims 8-9 wherein the receiving, by the base station from the UE, a random access request message carrying short subframe service information comprises:
receiving (S401), from the UE, a second preamble over a second random access channel, wherein bits of the second preamble are the 0^{th} to the 63^{rd} bits, and a size of a time domain resource of a physical random access channel bearing the second random access channel is 1 millisecond, wherein
a location of a time domain resource and/or a frequency domain resource of the physical random access channel bearing the second random access channel is different from that of a normal physical random access channel, the normal physical random access channel is a physical random access channel used in a random access procedure for access to a normal subframe service, and the location of the time domain resource and/or the frequency domain resource is used to determine that the short subframe service is to be performed after the random access procedure is triggered.

11. The method according to any one of claims 8 to 10, wherein the method further comprises:
sending by the base station, a random access parameter to the UE, wherein the random access parameter is used to indicate a time domain resource and a frequency domain resource that are available for sending data of the short subframe service.

12. An apparatus, wherein the apparatus is a user equipment, UE, (601, 602, 603) configured to perform the method according to any one of claims 1 to 7.

13. An apparatus, wherein the apparatus is a base station (801, 802, 803) configured to perform the method according to any one of claim 8 to 11.

## Patentansprüche

1. Direktzugriffsverfahren, umfassend:
Senden (S201) einer Direktzugriffsanforderungsnachricht an eine Basisstation durch ein Benutzergerät, UE, wobei die Direktzugriffsanforderungsnachricht Kurzteilframedienstinformationen trägt, die Kurzteilframedienstinformationen angeben, dass ein Kurzteilframedienst durch das UE durchgeführt werden soll, nachdem ein Direktzugriffsvorgang ausgelöst wurde, und die Dauer eines Kurzteilframes weniger als 1 Millisekunde beträgt; und
Übertragen (S202) von REST-Nachrichten des Direktzugriffsvorgangs durch das UE nach der Übertragung der Direktzugriffsanforderungsnachricht, wobei die REST-Nachrichten über eine Ressource übertragen werden, die dem Kurzteilframedienst entspricht, und die Ressource eine Zeitbereichsressource und eine Frequenzbereichsressource umfasst, die durch die Basisstation für das UE konfiguriert sind, um den Kurzteilframedienst durchzuführen;
wobei das Verfahren vor dem Senden einer Direktzugriffsanforderungsnachricht an eine Basisstation ferner umfasst:
Empfangen einer Rundsendungsnachricht aus der Basisstation durch das Benutzergerät, wobei die Rundsendungsnachricht Informationen über eine Zeitbereichsressource und eine Frequenzbereichsressource umfasst, die durch die Basisstation für das Durchführen des Direktzugriffsvorgangs durch das UE konfiguriert sind.

2. Verfahren gemäß Anspruch 1, wobei das Senden einer Direktzugriffsanforderungsnachricht durch das UE an eine Basisstation umfasst:
Senden (S301) einer ersten Präambel durch das UE über einen ersten Direktzugriffskanal an die Basisstation, wobei die Bits der ersten Präambel die Bits 0 bis N sind, wobei N≥64 und N eine ganze Zahl ist.

3. Verfahren gemäß Anspruch 2, wobei
die erste Präambel eine erste Gruppe von Präambeln und eine zweite Gruppe von Präambeln umfasst, wobei die erste Gruppe von Präambeln die Bits 0 bis 63 von Präambeln umfasst, die zweite Gruppe von Präambeln die Bits 64 bis N von Präambeln umfasst und die zweite Gruppe von Präambeln durch die Basisstation zum Bestimmen verwendet wird, dass der Kurzteilframedienst durch das UE durchgeführt werden soll, nachdem der Direktzugriffsvorgang ausgelöst wurde.

4. Verfahren gemäß Anspruch 1, wobei das Senden einer Direktzugriffsanforderungsnachricht an eine Basisstation durch das UE umfasst:
Senden (S401) einer zweiten Präambel über einen zweiten Direktzugriffskanal an die Basisstation, wobei die Bits der zweiten Präambel die Bits 0 bis 63 sind und eine Größe einer Zeitbereichsressource eines physikalischen Direktzugriffskanals, der den zweiten Direktzugriffskanal trägt, 1 Millisekunde beträgt, wobei
ein Ort einer Zeitbereichsressource und/oder einer Frequenzbereichsressource des physikalischen Direktzugriffskanals, der den zweiten Direktzugriffskanal trägt, sich von dem eines normalen physikalischen Direktzugriffskanals unterscheidet, der normale physikalische Direktzugriffskanal ein physikalischer Direktzugriffskanal ist, der in einem Direktzugriffsvorgang für den Zugriff auf einen normalen Teilframedienst verwendet wird, und der Ort der Zeitbereichsressource und/oder der Frequenzbereichsressource durch die Basisstation zum Bestimmen verwendet wird, dass der Kurzteilframedienst durch das UE durchgeführt werden soll, nachdem der Direktzugriffsvorgang ausgelöst wurde.

5. Verfahren gemäß Anspruch 1, wobei das Senden einer Direktzugriffsanforderungsnachricht an eine Basisstation durch das UE umfasst:
Senden (S501) einer dritten Präambel über einen dritten Direktzugriffskanal an die Basisstation, wobei ein physikalischer Direktzugriffskanal, der den dritten Direktzugriffskanal trägt, eine Zeitbereichsressource mindestens eines Orthogonal-Frequenzmultiplex-, OFDM-, Symbols belegt, und die Zeitbereichsressource, die durch den physikalischen Direktzugriffskanal, der den dritten Direktzugriffskanal trägt, belegt wird, angibt, dass der Kurzteilframedienst durchgeführt werden soll, nachdem der Direktzugriffsvorgang ausgelöst wurde.

6. Verfahren gemäß Anspruch 5, wobei das Verfahren ferner umfasst:
Erhöhen einer Konfigurationsfrequenz des dritten Direktzugriffskanals durch das UE, wobei ein Maximum der Konfigurationsfrequenz darin besteht, dass der dritte Zugriffskanal in einer für den dritten Direktzugriffskanal verfügbaren Zeitbereichsressource vollständig konfiguriert ist.

7. Verfahren gemäß einem der Ansprüche 1 bis 6, wobei das Verfahren ferner umfasst:
Empfangen eines Direktzugriffsparameters aus der Basisstation durch das UE, wobei der Direktzugriffsparameter zur Angabe einer Zeitbereichsressource und einer zum Senden von Daten des Kurzteilframedienstes verfügbaren Frequenzbereichsressource verwendet wird.

8. Direktzugriffsverfahren, umfassend:
Empfangen (S201) einer Direktzugriffsanforderungsnachricht, die Kurzteilframedienstinformationen trägt, aus einem Benutzergerät (UE) durch eine Basisstation, wobei die Kurzteilframedienstinformationen angeben, dass ein Kurzteilframedienst durchgeführt werden soll, nachdem ein Direktzugriffsvorgang ausgelöst wurde, und die Dauer eines Kurzteilframes weniger als 1 Millisekunde beträgt; und
Übertragen (S202) von REST-Nachrichten des Direktzugriffsvorgangs durch die Basisstation nach der Übertragung der Direktzugriffsanforderungsnachricht, wobei die REST-Nachrichten über eine Ressource übertragen werden, die dem Kurzteilframedienst entspricht, und die Ressource eine Zeitbereichsressource und eine Frequenzbereichsressource umfasst, die durch die Basisstation für das UE konfiguriert sind, um den Kurzteilframedienst durchzuführen;
wobei das Verfahren vor dem Empfangen einer Direktzugriffsanforderungsnachricht aus dem UE, die Kurzteilframedienstinformationen trägt, ferner umfasst:
Rundsenden einer Rundsendungsnachricht durch die Basisstation, wobei die Rundsendungsnachricht Informationen über die Zeitbereichsressource und die Frequenzbereichsressource umfasst, die durch die Basisstation zum Durchführen des Direktzugriffsvorgangs konfiguriert sind.

9. Verfahren gemäß Anspruch 8, wobei das Verfahren ferner umfasst:
Senden eines Direktzugriffsparameters an das UE durch die Basisstation, wobei der Direktzugriffsparameter zur Angabe einer Zeitbereichsressource und einer zum Senden von Daten des Kurzteilframedienstes verfügbaren Frequenzbereichsressource verwendet wird.

10. Verfahren gemäß einem der Ansprüche 8-9, wobei das Empfangen einer Direktzugriffsanforderungsnachricht, die Kurzteilframedienstinformationen trägt, aus dem UE durch die Basisstation umfasst:
Empfangen (S401) einer zweiten Präambel aus dem UE über einen zweiten Direktzugriffskanal, wobei Bits der zweiten Präambel die Bits 0 bis 63 sind und eine Größe einer Zeitbereichsressource eines physikalischen Direktzugriffskanals, der den zweiten Direktzugriffskanal trägt, 1 Millisekunde beträgt, wobei
ein Ort einer Zeitbereichsressource und/oder einer Frequenzbereichsressource des physikalischen Direktzugriffskanals, der den zweiten Direktzugriffskanal trägt, sich von dem eines normalen physikalischen Direktzugriffskanals unterscheidet, der normale physikalische Direktzugriffskanal ein physikalischer Direktzugriffskanal ist, der in einem Direktzugriffsvorgang für den Zugriff auf einen normalen Teilframedienst verwendet wird, und der Ort der Zeitbereichsressource und/oder der Frequenzbereichsressource zum Bestimmen verwendet wird, dass der Kurzteilframedienst durchgeführt werden soll, nachdem der Direktzugriffsvorgang ausgelöst wurde.

11. Verfahren gemäß einem der Ansprüche 8 bis 10, wobei das Verfahren ferner umfasst:
Senden eines Direktzugriffsparameters an das UE durch die Basisstation, wobei der Direktzugriffsparameter zur Angabe einer Zeitbereichsressource und einer zum Senden von Daten des Kurzteilframedienstes verfügbaren Frequenzbereichsressource verwendet wird.

12. Vorrichtung, wobei die Vorrichtung ein Benutzergerät, UE, (601, 602, 603) ist, das dazu konfiguriert ist, das Verfahren gemäß einem der Ansprüche 1 bis 7 durchzuführen.

13. Vorrichtung, wobei die Vorrichtung eine Basisstation (801, 802, 803) ist, die dazu konfiguriert ist, das Verfahren gemäß einem der Ansprüche 8 bis 11 durchzuführen.

## Revendications

1. Procédé d'accès aléatoire, comprenant les étapes consistant à :
envoyer (S201), par un équipement d'utilisateur (UE), un message de demande d'accès aléatoire à une station de base, le message de demande d'accès aléatoire transportant des informations de service de sous-trame courte, les informations de service de sous-trame courte indiquant qu'un service de sous-trame courte doit être exécuté par l'UE, après le déclenchement d'une procédure d'accès aléatoire, et que la durée d'une sous-trame courte est inférieure à 1 milliseconde ; et
transmettre (S202), par l'UE, des messages de repos de la procédure d'accès aléatoire après la transmission du message de demande d'accès aléatoire, les messages de repos étant transmis sur une ressource correspondant au service de sous-trame courte, et la ressource comprenant une ressource dans le domaine temporel et une ressource dans le domaine fréquentiel qui sont configurées par la station de base pour que l'UE exécute le service de sous-trame courte ;
le procédé comprenant en outre, avant l'envoi d'un message de demande d'accès aléatoire à une station de base, l'étape consistant à :
recevoir, par l'équipement utilisateur, un message de diffusion en provenance de la station de base, le message de diffusion comprenant des informations sur une ressource dans le domaine temporel et une ressource dans le domaine fréquentiel qui sont configurées par la station de base pour exécuter la procédure d'accès aléatoire par l'UE.

2. Procédé selon la revendication 1, dans lequel l'envoi, par l'UE, d'un message de demande d'accès aléatoire à une station de base comprend l'étape consistant à :
envoyer (S301), par l'UE, un premier préambule sur un premier canal d'accès aléatoire à la station de base, les bits du premier préambule étant les bits 0 à N, N≥64 et N étant un nombre entier.

3. Procédé selon la revendication 2, dans lequel :
le premier préambule comprend un premier groupe de préambules et un second groupe de préambules, le premier groupe de préambules comprenant les bits de préambules 0 à 63, le second groupe de préambules comprenant les bits de préambules 64 à N, et le second groupe de préambules étant utilisé par la station de base pour déterminer que le service de sous-trame courte doit être exécuté par l'UE après le déclenchement de la procédure d'accès aléatoire.

4. Procédé selon la revendication 1, dans lequel l'envoi, par l'UE, d'un message de demande d'accès aléatoire à une station de base comprend l'étape consistant à :
envoyer (S401) un deuxième préambule sur un deuxième canal d'accès aléatoire à la station de base, les bits du deuxième préambule étant les bits 0 à 63, et une taille d'une ressource dans le domaine temporel d'un canal physique d'accès aléatoire transportant le deuxième canal d'accès aléatoire étant de 1 milliseconde,
un emplacement d'une ressource dans le domaine temporel et/ou d'une ressource dans le domaine fréquentiel du canal physique d'accès aléatoire transportant le deuxième canal d'accès aléatoire étant différent de celui d'un canal physique d'accès aléatoire normal, le canal physique d'accès aléatoire normal étant un canal physique d'accès aléatoire utilisé dans une procédure d'accès aléatoire pour accéder à un service de sous-trame normale, et l'emplacement de la ressource dans le domaine temporel et/ou de la ressource dans le domaine fréquentiel étant utilisé par la station de base pour déterminer que le service de sous-trame courte doit être exécuté par l'UE après le déclenchement de la procédure d'accès aléatoire.

5. Procédé selon la revendication 1, dans lequel l'envoi, par l'UE, d'un message de demande d'accès aléatoire à une station de base comprend l'étape consistant à :
envoyer (S501) un troisième préambule sur un troisième canal d'accès aléatoire à la station de base, un canal physique d'accès aléatoire transportant le troisième canal d'accès aléatoire occupant une ressource dans le domaine temporel d'au moins un symbole de multiplexage par répartition orthogonale de la fréquence (OFDM), et la ressource dans le domaine temporel occupée par le canal physique d'accès aléatoire transportant le troisième canal d'accès aléatoire indiquant que le service de sous-trame courte doit être exécuté après le déclenchement de la procédure d'accès aléatoire.

6. Procédé selon la revendication 5, le procédé comprenant en outre l'étape consistant à :
augmenter, par l'UE, une fréquence de configuration du troisième canal d'accès aléatoire, un maximum de la fréquence de configuration signifiant que le troisième canal d'accès est entièrement configuré dans une ressource dans le domaine temporel disponible pour le troisième canal d'accès aléatoire.

7. Procédé selon l'une quelconque des revendications 1 et 6, le procédé comprenant en outre l'étape consistant à :
recevoir, par l'UE, un paramètre d'accès aléatoire en provenance de la station de base, le paramètre d'accès aléatoire étant utilisé pour indiquer une ressource dans le domaine temporel et une ressource dans le domaine fréquentiel qui sont disponibles pour envoyer des données du service de sous-trame courte.

8. Procédé d'accès aléatoire, comprenant les étapes consistant à :
recevoir (S201), par une station de base, en provenance d'un équipement d'utilisateur (UE), un message de demande d'accès aléatoire transportant des informations de service de sous-trame courte, les informations de service de sous-trame courte indiquant qu'un service de sous-trame courte doit être exécuté après le déclenchement d'une procédure d'accès aléatoire et que la durée d'une sous-trame courte est inférieure à 1 milliseconde ; et
transmettre (S202), par la station de base, des messages de repos de la procédure d'accès aléatoire après la transmission du message de demande d'accès aléatoire, les messages de repos étant transmis sur une ressource correspondant au service de sous-trame courte, et la ressource comprenant une ressource dans le domaine temporel et une ressource dans le domaine fréquentiel qui sont configurées par la station de base pour que l'UE exécute le service de sous-trame courte ;
le procédé comprenant en outre, avant la réception, en provenance de l'UE, d'un message de demande d'accès aléatoire transportant des informations de service de sous-trame courte, l'étape consistant à :
diffuser, par la station de base, un message de diffusion, le message de diffusion comprenant des informations sur la ressource dans le domaine temporel et la ressource dans le domaine fréquentiel qui sont configurées par la station de base pour exécuter la procédure d'accès aléatoire.

9. Procédé selon la revendication 8, le procédé comprenant en outre l'étape consistant à :
envoyer, par la base station, un paramètre d'accès aléatoire à l'UE, le paramètre d'accès aléatoire étant utilisé pour indiquer une ressource dans le domaine temporel et une ressource dans le domaine fréquentiel qui sont disponibles pour envoyer des données du service de sous-trame courte.

10. Procédé selon l'une quelconque des revendications 8 et 9, dans lequel la réception, par la station de base en provenance de l'UE, d'un message de demande d'accès aléatoire transportant des informations de service de sous-trame courte comprend l'étape consistant à :
recevoir (S401), en provenance de l'UE, un deuxième préambule sur un deuxième canal d'accès aléatoire, les bits du deuxième préambule étant les bits 0 à 63, et une taille d'une ressource dans le domaine temporel d'un canal physique d'accès aléatoire transportant le deuxième canal d'accès aléatoire étant de 1 milliseconde,
un emplacement d'une ressource dans le domaine temporel et/ou d'une ressource dans le domaine fréquentiel du canal physique d'accès aléatoire transportant le deuxième canal d'accès aléatoire étant différent de celui d'un canal physique d'accès aléatoire normal, le canal physique d'accès aléatoire normal étant un canal physique d'accès aléatoire utilisé dans une procédure d'accès aléatoire pour accéder à un service de sous-trame normale, et l'emplacement de la ressource dans le domaine temporel et/ou de la ressource dans le domaine fréquentiel étant utilisé pour déterminer que le service de sous-trame courte doit être exécuté après le déclenchement de la procédure d'accès aléatoire.

11. Procédé selon l'une quelconque des revendications 8 et 10, le procédé comprenant en outre l'étape consistant à :
envoyer, par la base station, un paramètre d'accès aléatoire à l'UE, le paramètre d'accès aléatoire étant utilisé pour indiquer une ressource dans le domaine temporel et une ressource dans le domaine fréquentiel qui sont disponibles pour envoyer des données du service de sous-trame courte.

12. Appareil, l'appareil étant un équipement d'utilisateur (UE) (601, 602, 603) configuré pour réaliser le procédé selon l'une quelconque des revendications 1 à 7.

13. Appareil, l'appareil étant une station de base (801, 802, 803) configurée pour réaliser le procédé selon l'une quelconque des revendications 8 à 11.
